Europäisches Patentamt

European Patent Office

Office européen des brevets

(19)

(11) Veröffentlichungsnummer : **0 355 022 B1**

## (12) EUROPÄISCHE PATENTSCHRIFT

(45) Veröffentlichungstag der Patentschrift :
**11.03.92 Patentblatt 92/11**

(51) Int. Cl.$^5$ : **C02F 3/30, C02F 3/04**

(21) Anmeldenummer : **89114973.4**

(22) Anmeldetag : **12.08.89**

(54) **Einrichtung und Verfahren zur mikrobiologischen Wasseraufbereitung.**

(30) Priorität : **16.08.88 DE 3827715**

(43) Veröffentlichungstag der Anmeldung :
**21.02.90 Patentblatt 90/08**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI LU NL SE**

(56) Entgegenhaltungen :
**EP-A- 0 293 521**
**DE-A- 3 419 139**
**DE-A- 3 431 568**
**JOURNAL WATER POLLUTION CONTROL FE-**
**DERATION, Band 58, Nr. 2, Februar 1986, Sei-**
**ten 115-121, Washington, DC, US; KI-HO SONG**
**et al.: "Media design factors for fixed-bed**
**filters"**

(56) Entgegenhaltungen :
**JOURNAL OF THE WATER POLLUTION CON-**
**TROL FEDERATION, Band 56, Nr. 8, August**
**1984, Seiten 955-961, Washington, DC, US:**
**D.S. PARKER et al.: "Effect of plastic media**
**configuration on trickling filter performance"**
**BIOTECHNOLOGY AND BIOENGINEERING,**
**Symp.Nr. 11, Mai 1981, Seiten 415-427, New**
**York, US; J.F. WALKER, Jr et al.: "Biological**
**treatment of nitrate wastewater using fluidi-**
**zed-bed bioreactors"**
**L. Hartmann, "Biologische Abwasserreini-**
**gung"**

(73) Patentinhaber : **METZ MANNHEIM GMBH**
**Friedrich-Engelhorn-Strasse 5-9**
**W-6800 Mannheim 1 (DE)**

(72) Erfinder : **Götz, Helmut**
**Ahornweg 7**
**W-5455 Rengsdorf (DE)**
Erfinder : **Scheibinger, Ludwig, Dipl.-Ing.**
**Alfonsstrasse 7a**
**W-8000 München 19 (DE)**
Erfinder : **Steinbach, Peter, Dr.**
**Neugasse 23d**
**W-6701 Kallstadt (DE)**

(74) Vertreter : **Meyer-Roedern, Giso, Dr.**
**Bergheimer Strasse 10-12**
**W-6900 Heidelberg 1 (DE)**

**Beschreibung**

Die Erfindung betrifft eine Einrichtung zur mikrobiologischen Wasseraufbereitung, insbesondere Stickstoffeliminierung, mit einem durchströmten überfluteten ersten Festbettreaktor zur mikrobiologischen Denitrifikation, der mit einem als Tropfkörper ausgebildeten zweiten Festbettreaktor zur mikrobiologischen Nitrifikation über eine sich oberhalb des zweiten Festbettreaktors befindliche Berieselungsanlage verbunden ist.

Eine derartige Einrichtung ist aus der DE-A-34 31 568 bekannt. Es handelt sich um eine Einrichtung zur mikrobiologischen Wasseraufbereitung, bei der feststofffreies Wasser unter Zusatz von Chemikalien und unter Druck einem ersten Festbettreaktor zur aneroben Denitrifikation zugeführt wird. In diesem Festbettreaktor befindet sich ein fallend durchströmtes Schüttbett aus feinkörnigem Material mit kleinen Zwischenräumen als Aufenthaltsorte für die Mikroorganismen. Das Material des Schüttbetts nimmt den größten Teil des Reaktionsvolumens des Festbettreaktors ein. Das denitrifzierte Wasser wird unter Überdruck einer Berieselungsanlage zugeführt, die sich oberhalb eines als Riesler-Filter-Kombination ausgebildeten zweiten Festbettreaktor befindet, in dem unter Druckluftzufuhr eine aerobe biologische Nitrifikation stattfindet.

Aus dem JWPCF Band 58, Nr. 2, Februar 1986, Seite 115-121 ist ein aufwärts betriebener, anaerob arbeitender Festbettreaktor bekannt, der einen Blockfilter mit vertikal verlaufenden, röhrenförmigen Kanälen enthält.

Im JWPCF Band 56, Nr. 8, August 1984, S. 955-961 ist eine Einrichtung zur biologischen Wasseraufbereitung beschrieben, die aus einem als Tropfkörper ausgebildeten Festbettreaktor besteht, der über ein belüftetes Biomassekontaktbecken mit einem Klärbecken verbunden ist. Das belüftete Biomassekontaktbecken dient zum weiteren aeroben biologischen Abbau organischer Abfallstoffe und als Absetzbecken für abgelöste Biomasse aus dem Tropfkörper.

Aus L. Hartmann, Biologische Abwasserreinigung, 1983, S. 213-215 ist bekannt, daß es bei stromaufwärts betriebenen Reaktoren zu Ablösung von Biomasse kommt und infolgedessen Sedimentationseinrichtungen empfehlenswert sein können.

Aufgabe der Erfindung ist es, eine im Aufbau unaufwendige, kompakte, für eine Modulbauweise ausgezeichnet geeignete Einrichtung der eingangs genannten Art zu schaffen, die bei geringen Anforderungen hinsichtlich einer Vorbehandlung des Wassers eine hohe Wasseraufbereitungskapazität hat und sich durch einen wartungsarmen Betrieb auszeichnet.

Diese Aufgabe wird mit einer derartigen Einrichtung dadurch gelöst, daß der erste Festbettreaktor ein aus geschlossene aufsteigende Strömungswege zwischen sich einschließenden Segmenten aufgebauter, aufsteigend durchströmter Block ist, der sich oberhalb eines Sedimentationsabteils befindet, in das über einen Zulauf, der in einigem Abstand von der Unterseite des ersten Festbettreaktors angeordnet ist, Wasser eingespeist wird, daß sich oberhalb des ersten Festbettreaktors ein Überlauf befindet, der mit der Berieselungsanlage in Verbindung steht, und daß unter dem zweiten Festbettreaktor eine Auffangwanne angeordnet ist, die einen Ablauf hat.

Bei dieser Einrichtung geht der mikrobiologischen Wasseraufbereitung eine bei unaufwendigem Aufbau sehr wirksame mechanische Feststoffabscheidung durch sedimentation in dem Sedimentationsabteil voraus. Durch die Verrieselung des Wassers in der oberhalb des zweiten Festbettreaktors vorgesehenen Beriebelungsanlage wird das Wasser in einem nicht-kontinuierlichen Strom verteilt, von Stickstoff, Kohlendioxid und anderen im Wasser gelösten Gasen gestrippt und in unaufwendiger Weise mit Sauerstoff angereichert. Die Tatsache, daß der Festbettreaktor der mikrobiologischen Denitrifikationsstufe aufsteigend und der Festbettreaktor der Nitrifikationsstufe als Tropfkörper fallend durchströmt wird, ist mit Blick auf die zu installierende Pumpenleistung und einen kompakten Aufbau der Einrichtung von Vorteil.

Im Zulauf der erfindungsgemäßen Einrichtung kann außer dem erwähnten Sedimentationsabteil eine weitere Einrichtung zur mechanischen Feststoffabscheidung angeordnet sein, und zwar insbesondere ein Filter, vorzugsweise ein Dünnschichtfilter, oder ein Mikrosieb. Die Feststofftrennung dient dazu, das zu behandelnde Wasser von groben Feststoffen bis hin zu in kolloidaler Form vorliegenden Verunreinigungen zu befreien und diese von der mikrobiologischen Wasseraufbereitungsstufe fernzuhalten. In deren Ablauf kann ebenfalls eine Einrichtung zur mechanischen Feststoffabscheidung liegen. Es besteht beispielsweise die Möglichkeit, die Auffangwanne selbst als Sedimentationsbehälter auszubilden, oder der Auffangwanne ein Sedimentationsbecken nachzuordnen. Alternativ oder zusätzlich kann auch im Ablauf eine Filtration oder Mikrosiebung des behandelten Wassers erfolgen. Das Wasser wird so von durch die mikrobiologische Wasseraufbereitung entstandenen Feststoffen, insbesondere aus den Festbettreaktoren mitgerissenem Bio-Rasen, vollständig befreit.

Der in der Denitrifikationszone liegende Festbettreaktor ist ein aus geschlossene aufsteigende Strömungswege zwischen sich einschließenden Segmenten aufgebauter Block. Der in der Nitrifikationszone liegende Festbettreaktor ist hingegen vorzugsweise aus Segmenten aufgebaut, die miteinander kommunizierende und sich insbesondere kreuzende Strömungswege zwischen sich einschließen. Es können aber auch anders geformte Segmente Verwendung finden. Die Segmente bestehen vorzugsweise aus gezogener Kunststofffolie.

Sie haben eine große, die Strömungswege begrenzende Oberfläche, die zur Ansiedlung der Mikroorganismen gut geeignet ist.

Der zu der erfindungsgemäßen Einrichtung führende Zulauf kann an einen in dem Sedimentationsabteil angeordneten Verteiler angeschlossen sein. Damit wird eine gute Verteilung des Wassers und eine effektive Ausnutzung des in der Denitrifikationszone liegenden ersten Festbettreaktors erreicht.

Vom Boden des Sedimentationsabteils geht vorzugsweise ein Schlammabzug ab, mit dem sedimentierte Feststoffe, zu denen insbesondere von dem ersten Festbettreaktor abgelöster Bio-Rasen gehört, bei Bedarf auf unaufwendige Weise abgezogen werden können. Bei einer Ausbildung der Auffangwanne als Sedimentationsbehälter empfiehlt es sich, diesen ebenfalls am Boden mit einem Schlammabzug zu versehen.

Am unteren Ende des zweiten Festbettreaktors sollte sich über der Auffangwanne ein Luftzutritt befinden. Damit ist eine Luftzufuhr zu dem in der Nitrifikationszone liegenden zweiten Festbettreaktor nach dem Kamineffekt, also in unaufwendiger Weise ohne Gebläse gewährleistet.

Die erfindunsgemäße Einrichtung ist vorzugsweise ein sämtliche Anschlüsse an einer Seite aufweisendes kompaktes Modul. Man kann so problemlos eine der gewünschten Kapazität entsprechende Anzahl parallelgeschlateter Module in einer Reihe anordnen.

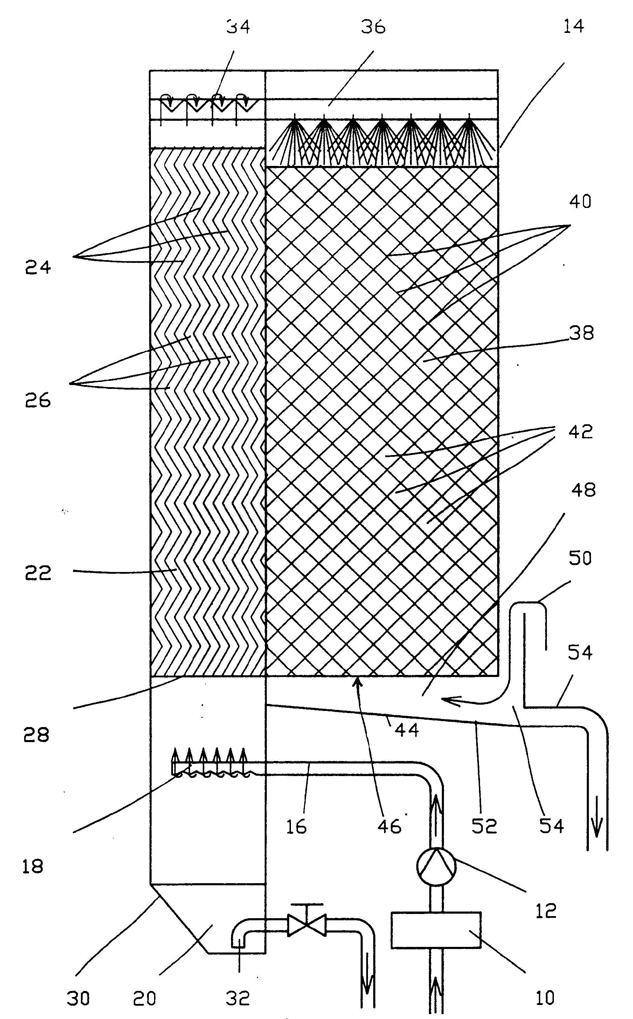

Die Erfindung wird im folgenden anhand der Zeichnung näher erläutert, die schematisch eine Einrichtung zur mikrobiologischen Wasseraufbereitung zeigt.

Im Vorlauf der Einrichtung liegt ein mechanisches Filter 10, beispielsweise in Gestalt eines Plattenfilters, in dem das Wasser dem Feinsieb der Filterplatten entsprechend von groben Feststoffen befreit wird. Statt des Filters 10 kann auch ein anderer mechanischer Abscheider, insbesondere ein Mikrosieb, Verwendung finden. Das aus dem Filter oder Mikrosieb 10 kommende Wasser wird mit einer Pumpe 12 unter Überdruck zu dem Wasseraufbereitungsmodul 14 gefördert, über dessen Zulauf 16 es zu einem Verteiler 18 gelangt, der in einem Sedimentationsabteil 20 liegt. Oberhalb des Verteilers ist ein erster Festbettreaktor 22 angeordnet, in dem eine mikrobiologische Denitrifikation des Wasser stattfindet. Der Festbettreaktor 22 besteht aus Segmenten 24, die aus gezogener Kunststoffolie hergestellt sind und geschlossene aufsteigende Strömunswege 26 zwischen sich einschließen. Der Verteiler 18 ist in einigem Abstand von der Unterseite 28 des Festbettreaktors 22 angeordnet. Er dient dazu, das Wasser über dessen vollen Querschnitt in dem Sedimentationsabteil 20 zu verteilen. Dabei herrschen vergleichsweise ruhige Strömungsverhältnisse, so daß in dem Wasser noch enthaltene Schwebstoffe und von dem Festbettreaktor 22 abgelöster Bio-Rasen Gelegenheit haben, im Gegenstrom zu der aufsteigenden Wasserströmung zu sedimentieren. Das Sedimentationsabteil 20 verjüngt sich mit wenigstens einer Schrägwand 30 nach unten. Die Keil- oder Kegelform des Sedimentationsabteils fördert die Entstehung einer Wirbelströmung, die sich auf die Agglomeration und Ausflockung von Feststoffen vorteilhaft auswirkt. Im Bodenbereich des Sedimentationsabteils 20 ist ein Schlammabzug 32 vorgesehen, über den der sich ansammelnde Schlamm periodisch abgezogen wird.

Die die Strömungswege 26 begrenzende Oberfläche der Segmente 24 bildet den Ansiedlungsbereich für die sessilen Mikroorganismen, die unter anoxischen Bedingungen die mikrobiologische Wasserreinigung einschließlich der Denitrifikation übernehmen. Dabei erfolgt eine Umsetzung von in dem Wasser gelösten Nitraten zu gasförmigen Stickstoff. Im Prinzip veratmen die Mikroorganismen bei im Wasser nicht vorhandenem gelöstem Sauerstoff den chemisch gebundenen Sauerstoff des Nitrates, wodurch das Nitrat reduziert und zu gasförmigem Stickstoff umgewandelt wird. Zugleich werden die im Wasser gelösten organischen Kohlenstoffe verarbeitet.

Oberhalb des ersten Festbettreaktors 22 ist eine Überlaufrinne 34 angeordnet, die das Wasser über ein Verrieselungsrohr 36 der sich anschließenden Nitrifikationsstufe zuführt. Bei der Verrieselung, die z. B. durch ein sprinklerartiges Versprühen mit nach oben gerichteten Düsen, duch Herabtropfen auf einen Prallteller oder eine Kaskade von Pralltellern u.a.m. erfolgen kann, wird das Wasser in einem nicht-kontinuierlichen Strom verteilt. Dabei werden im Wasser gelöste Gase, insbesondere Stickstoff und Kohlendioxid, gestrippt und das Wasser zugleich mit Luftsauerstoff angereichert. Neben dem ersten Festbettreaktor 22 ist davon getrennt ein zweiter Festbettreaktor 38 angeordnet, auf den das Wasser herabrieselt. Der zweite Festbettreaktor 38 ist ein Tropfkörper, der ebenfalls aus Segmenten 40 aufgebaut ist, die aus gezogener Kunststoffolie hergestellt sind. Im Gegensatz zu dem geschlossene aufsteigende Strömungswege aufweisende ersten Festbettreaktor 22 kreuzen sich aber die zwischen den Segmenten 40 des zweiten Festbettreaktors 38 ausgebildeten Strömungswege 42 vielfältig, so daß eine Querverteilung und lange Verweildauer des herabtropfenden Wassers gewährleistet sind.

Unter dem zweiten Festbettreaktor 38 befindet sich eine Auffangwanne 44. Diese ist so dimensioniert, daß zwischen dem sich darin sammelnden Wasser und der Unterseite 46 des zweiten Festbettreaktors 38 ein Luftspalt 48 verbleibt, zu dem von außen ein Luftzutritt erfolgen kann, wie dies durch den Pfeil 50 angedeutet ist. Der zweite Festbettreaktor 38 wird so nach dem Kamineffekt in aufsteigender Strömung mit Luftsauerstoff versorgt. In dem zweiten Festbettreaktor 38 erfolgt durch an der Oberfläche der Segmente 40 angesiedelte Mikroorganismen unter aeroben Bedingungen eine Nitrifikation des Wassers, bei der Ammoniak über Nitrit zu Nitrat abgebaut (aufoxidiert) wird.

Die Auffangwanne 44 hat einen nach unten geneigten Boden 52, von dessen tiefstem Punkt der Ablauf 54 des Wasseraufbereitungsmoduls 14 abgeht. Der Ablauf 54 kann zu einem Sedimentationsbecken oder zu einem weiteren Filter oder Mikrosieb führen (nicht dargestellt). Es besteht auch die Möglichkeit, die Auffangwanne 44 selbst als Sedimentationsbehälter auszubilden.

Die Festbettreaktoren 22, 38 der Denitrifikations- und/oder Nitrifikationszone können auch aus anders gestalteten Segmenten bzw. Trägermaterialien aufgebaut sein (nicht dargestellt). Das Wasseraufbereitungsmodul 14 hat sämtliche Anschlüsse auf einer Seite, so daß man der gewünschten Kapazität entsprechend mehrere parallelgeschaltete Wasseraufbereitungsmodule 14 in einer Reihe anordnen kann.

**Patentansprüche**

1. Einrichtung zur mikrobiologischen Wasseraufbereitung, insbesondere Stickstoffeliminierung, mit einem durchströmten überfluteten ersten Festbettreaktor (22) zur mikrobiologischen Denitrifikation, der mit einem als Tropfkörper ausgebildeten zweiten Festbettreaktor (38) zur mikrobiologischen Nitrifikation über eine sich oberhalb des zweiten Festbettreaktors (38) befindliche Berieselungsanlage (36) verbunden ist, dadurch gekennzeichnet, daß der erste Festbettreaktor (22) ein aus geschlossene aufsteigende Strömungswege (26) zwischen sich einschließenden Segmenten (24) aufgebauter, aufsteigend durchströmter Block ist, der sich oberhalb eines Sedimentationsabteils (20) befindet, in das über einen Zulauf (16), der in einigem Abstand von der Unterseite des ersten Festbettreaktors (22) angeordnet ist, Wasser eingespeist wird, daß sich oberhalb des ersten Festbettreaktors (22) ein Überlauf (34) befindet, der mit der Berieselungsanlage (36) in Verbindung steht, und daß unter dem zweiten Festbettreaktor (38) eine Auffangwanne (44) angeordnet ist, die einen Ablauf (54) hat.

2. Einrichtung nach Anspruch 1, dadurch gekennzeichnet, daß im Zulauf (16) und/oder in einem Ablauf (54) der Auffangwanne eine Einrichtung zur mechanischen Feststoffabscheidung angeordnet ist, insbesondere ein Filter (10), vorzugsweise ein Dünnschichtfilter, oder ein Mikrosieb.

3. Einrichtung nach Anspruch 1 oder 2, dadurch gekennzeichnet, daß der zweite Festbettreaktor (38) ein aus miteinander kommunizierende und sich insbesondere kreuzende Strömungswege (42) zwischen sich einschließenden Segmenten (40) aufgebauter Block ist.

4. Einrichtung nach einem der Ansprüche 1 bis 3, dadurch gekennzeichnet, daß die Segmente (24, 40) aus gezogener Kunststoffolie bestehen.

5. Einrichtung nach einem der Ansprüche 1 bis 4, dadurch gekennzeichnet, daß der Zulauf (16) an einen in dem Sedimentationsabteil (20) angeordneten Verteiler (18) angeschlossen ist.

6. Einrichtung nach einem der Ansprüche 1 bis 5, dadurch gekennzeichnet, daß vom Boden des Sedimentationsabteils (20) ein Schlammabzug (32) abgeht.

7. Einrichtung nach einem der Ansprüche 1 bis 6, dadurch gekennzeichnet, daß sich am unteren Ende des zweiten Festbettreaktors (38) über der Auffangwanne (44) ein Luftzutritt (48) befindet.

8. Einrichtung nach einem der Ansprüche 1 bis 7, dadurch gekennzeichnet, daß die Auffangwanne (44) als Sedimentationsbehälter ausgebildet ist

9. Einrichtung nach einem der Ansprüche 1 bis 8, dadurch gekennzeichnet, daß der Auffangwanne (44) ein Sedimentationsbecken nachgeordnet ist.

10. Einrichtung nach einem der Ansprüche 1 bis 9, dadurch gekennzeichnet, daß sie als vorzugsweise sämtliche Anschlüsse an einer Seite aufweisendes kompaktes Modul (14) aufgebaut ist.

**Claims**

1. Device for microbiological water treatment, in particular removal of nitrogen, with a flowed through flooded first fixed bed reactor (22) for microbiological denitrification which is connected to a second fixed bed reactor (38) for microbiological nitrification designed as a drip device by a sprinkler system (36) located above the second fixed bed reactor (38), characterized in that the first fixed bed reactor (22) is a block flowed through ascendingly and consisting of segments (24) which enclose vertically rising closed channels (26), said block being located above a sedimentation compartment (20) into which water is introduced through a feeder (16) arranged at some distance from the lower side of the first fixed bed reactor (22), in that an overflow device (34) is arranged above the first fixed bed reactor (22), said overflow device (34) being connected with the sprinkler system (36), and in that a catch basin (44) provided with a drain (54) is arranged under the second fixed bed reactor (38).

2. Device according to claim 1, characterized in that the feeder (16) and/or a drain (54) of the catch basin contains a mechanical solid separator, in particular a filter (10), preferably a thin layer filter, or a microsieve.

3. Device according to claims 1 to 2, characterized in that the second fixed bed reactor (38) is a block consisting of segments (40) which enclose internally communicating and in particular transversing channels (42).

4. Device according to claims 1 to 3, characterized in that the segments (24, 40) are composed of drawn plastic foil.

5. Device according to claims 1 to 4, characterized in that the feeder (16) is connected to a distributor (18) disposed in the sedimentation compartment (20).

6. Device according to claims 1 to 5, characterized in that a sludge drain (32) leads from the base of the sedimentation compartment (20).

7. Device according to claims 1 to 6, characterized in that an air entrance (48) is disposed at the lower end of the second fixed bed reactor (38) above the catch basin.

8. Device according to claims 1 to 7, characterized in that the catch basin (44) is designed as a sedimentation compartment.

9. Device according to claims 1 to 8, characterized in that the basin (44) is connected to a downstream sedimentation basin.

10. Device according to claims 1 to 9, characterized in that it is constructed as a compact module (14) with preferably all connections on one side.

**Revendications**

1. Dispositif pour le traitement microbiologique de l'eau, notamment pour éliminer l'azote, comportant un premier réacteur à lit solide (22) immergé, traversé par un courant, pour la dénitrification microbiologique, qui communique avec un deuxième réacteur à lit solide (38) conçu comme un percolateur pour la nitrification microbiologique, par l'intermédiaire d'une installation d'arrosage (36) se trouvant au-dessus du deuxième réacteur à lit solide (38), caractérisé en ce que le premier réacteur à lit solide (22) est un bloc parcouru par un courant ascendant, constitué par des segments (24) enfermant entre eux des parcours d'écoulement (26) ascendants, fermés, lequel bloc se trouve au-dessus d'un compartiment de sédimentation (20) dans lequel de l'eau est envoyée, par une arrivée (16) qui se situe à une certaine distance de la face inférieure du premier réacteur à lit solide (22), en ce qu'au-dessus du premier réacteur à lit solide (22) se trouve un trop-plein (34) qui communique avec l'installation d'arrosage (36) et en ce qu'au-dessous du deuxième réacteur à lit solide (38) est disposé un bac de collecte (44) qui possède une évacuation (54).

2. Dispositif selon la revendication 1, caractérisé en ce que dans l'arrivée (16) et/ou dans une évacuation (54) du bac de collecte, il est prévu un dispositif pour la séparation mécanique des matières solides, notamment un filtre (10), de préférence un filtre à couches minces ou un micro-tamis.

3. Dispositif selon la revendication 1 ou 2, caractérisé en ce que le deuxième réacteur à lit solide (38) est un bloc constitué par des segments (44) enfermant entre eux des parcours d'écoulement (42) communiquant entre eux et se croisant notamment.

4. Dispositif selon l'une quelconque des revendications 1 à 3, caractérisé en ce que les segments (24, 40) sont constitués par une feuille en matière plastique étirée.

5. Dispositif selon l'une quelconque des revendications 1 à 4, caractérisé en ce que l'arrivée (16) est raccordée à un répartiteur (18) placé dans le compartiment de sédimentation (20).

6. Dispositif selon l'une des revendications 1 à 5, caractérisé en ce qu'un soutirage de boues (32) part du fond du compartiment de sédimentation (20).

7. Dispositif selon l'une quelconque des revendications 1 à 6, caractérisé en ce qu'une arrivée d'air (48) se trouve à l'extrémité intérieure du deuxième réacteur à lit solide (38), au-dessus du bac de collecte (44).

8. Dispositif selon l'une quelconque des revendications 1 à 7, caractérisé en ce que le bac de collecte (44) est un réservoir de sédimentation.

9. Dispositif selon l'une quelconque des revendications 1 à 8, caractérisé en ce qu'un bassin de sédimentation est placé en aval du bac de collecte.

10. Dispositif selon l'une quelconque des revendications 1 à 9, caractérisé en ce qu'il est conçu comme un module (14) compact comportant sur un côté de préférence tous les raccords.